# EUROPEAN PATENT SPECIFICATION

(11) **EP 0 891 307 B1**
(45) Date of publication and mention of the grant of the patent: **28.06.2000**
(21) Application number: 97919312.5
(22) Date of filing: 01.04.1997
(51) Int. Cl.: C03B 37/05, C03C 25/10, C03C 1/02, C03B 18/06

(54) **MAN-MADE VITRIOUS FIBRE PRODUCTS AND THEIR PRODUCTION**
FASERPRODUKTE UND IHRE HERSTELLUNG
PRODUITS A BASE DE FIBRES DE VERRE ARTIFICIELLES ET LEUR FABRICATION

(30) Priority: 02.04.1996 GB 9606979
(43) Date of publication of application: 20.01.1999
(73) Proprietor: Rockwool International A/S, 2640 Hedehusene (DK)
(72) Inventor: TONDER, Flemming, Weiss, DK-4450 Jyderup (DK); CLAUSEN, Anders, Ulf, DK-4600 Koge (DK)
(74) Representative: Lawrence, Peter Robin Broughton
(86) International application number: EP9701640
(87) International publication number: WO9736833

(56) References cited:
- WO-A-90/15032
- WO-A-92/06047
- WO-A-95/00453
- US-A- 2 944 284
- US-A- 3 343 933
- US-A- 5 123 949
- US-A- 5 232 638

## Description

This invention relates to man-made vitreous fibre (MMVF) products and in particular to such products containing a substantial amount of recycled, waste, MMV fibre.

An MMVF product is conveniently made by applying mineral melt to a rotating fiberising rotor and thereby throwing the melt from the rotor as fibres and forming a substantially annular cloud of the fibres, and collecting the fibres as a web on a collector.

The manufacture of MMVF product tends to be accompanied by the manufacture of some scrap MMVF and it is conventional practice to try to reuse this material. Accordingly many MMVF products are formed from primary fibres, which are fibres formed off the fiberising rotor and collected on the collector as a web, together with secondary fibres, which are recycled fibres from the same or a previous production of MMVF product.

One way of incorporating the secondary, recycled, fibres is by scattering them, usually entrained in air, into the cloud of primary fibres that is travelling from the rotor to the collector. Unfortunately the secondary fibres that are introduced in this way tend to be present as tufts rather than as individual fibres and so tend to cause discontinuities in the web. Also when, as is usual, binder is being sprayed onto the primary fibres it is common for the secondary fibres to be inadequately wetted with binder.

Increasing the amount of secondary fibres in the MMVF product therefore tends to detract from its properties and so in practice the amount of secondary fibres that can be introduced satisfactorily, while maintaining satisfactory product properties, is lower than would be desired.

It is proposed in WO-A-90/15032 to introduce particles, which can be secondary fibres, transported in air through a hollow shaft on which the rotor is mounted for rotation. By this means it is possible to blow secondary fibres into the annular cloud of primary fibres that is formed around and in front of the rotor. However it is difficult to entrain secondary fibres satisfactorily in an air stream such that a significant amount can satisfactorily be blown through and out of such a shaft in a reliable manner. Accordingly, it is not possible to introduce large amounts of secondary fibres conveniently by this technique.

It is proposed in EP-A-530843 to introduce particulate material, which can be secondary MMVF fibres, entrained in air by various techniques. In one technique a stream of secondary fibres or other particulate material carried in air is supplied as an annular flow around a shaft through which binder is supplied. The secondary fibres are caused to move radially outwards by the binder flow towards the annular cloud of MMVF fibres. In other techniques a stream of the particles entrained in air is blown into a cloud of MMV fibres. It is stated that fibres which are to be added by these techniques may be finely ground. The proposed length range is between about 0.3mm and 3mm. These methods also fail to provide a convenient manner of incorporating significant amounts of secondary fibres without detracting from the properties of the final product.

US-A-5,232,638 proposes a method of intermingling additive particles of various types with the primary fibres. The annular cloud of primary fibres which is produced is caused to contact the outer surface of a bell mounted on the axis of the rotor from which the primary fibres are formed, and below the rotor. This system tends to reduce the flow velocity of the fibres as they contact the bell and causes formation of tufts, reducing the wool quality. It is just after the point of contact that additive fibres can be introduced. As a result partly of the formation of tufts in the veil of primary fibres and partly of the rather large distance between the rotor and the addition of the additive fibres it is not possible in practice to obtain a uniform mixture of the additive fibres with the primary fibres. Although this document suggests the desirability of being able to introduce uniformly distributed additive materials, the reality is that with this system a uniform distribution would not be achieved. In addition, when liquid binder is incorporated this is supplied along a separate conduit from that supplying the particulate material. If binder and particulate materials are to be added this does not allow their intimate mixing before contact with the primary fibres and consequently hinders the formation of a uniform distribution of particles throughout the primary fibres.

This document also suggests that fibres may be added as particulate additive. It does not suggest that these should have a length much shorter than the fibres which will be produced from the rotor. Additionally, it only suggests use of fibres which are different from those produced from the rotor. The main aim of this document is to deliver foamed, particulate binder material.

US-A-5,123,949 also discloses a process which is said to aid in uniform distribution of particles throughout primary fibres. In this disclosure only fibres different from the primary fibres are suggested and there is no suggestion that they should be of a length different from that of the primary fibres. Even when ground fibres are suggested the minimum length for these which is proposed is nearly 2mm. In the process described binder is supplied along one conduit whilst particulate additive is supplied along another. The only opportunity the materials have for mingling is just before they contact the primary fibres. The particulate additive is directed towards the primary fibres by the air currents flowing beneath the rotating disk from which the primary fibres are formed. This again contributes to the formation of a non-uniform distribution of the particulate material within the primary fibres.

In all these techniques where the primary fibres are formed off a fiberising rotor and are carried towards and collected on a collector surface, the resultant product is an air laid web. Such a product has a density below 300 kg/m³, even after compression. It is also known to make products by wet laying, but these have a dense type of structure and are not suitable for the purposes for which air laid MMVF products are used.

The fibres in air laid MMVF products have various lengths and the frequency of each length typically approaches a log-normal distribution. On a number basis, the percentage of very short fibres (below 0.5mm) is always very low, for instance below 10% and usually at least about 50% of the fibres are at least lmm in length, for instance up to 15mm. Often at least 50% by number of the fibres have a length in the range 1 to 5mm. For glass wool, the amount of fibres below 0.5mm in length is again very low, below 10%, and usually at least 70% are in the range 1 to 15mm, with at least 50% often being in the range of 3 to 10mm. These fibre length distributions are typical of air laid products made solely from primary fibres. When secondary, recycled, fibres are incorporated in the known methods, the fibre length distribution generally is not significantly altered since the secondary MMVF fibres generally have a somewhat similar length distribution to the primary fibres in that any length degradation which may have occurred during the recycling is usually not sufficiently great to influence significantly the fibre length distribution in the product containing the secondary fibres.

As indicated, existing products containing recycled secondary MMV fibres tend to have inferior properties (compared to products free of the secondary fibres) if the amount of the secondary fibres is increased above a rather low level.

It would be desirable to provide a substantially non-dusting MMVF product having a significant proportion of secondary fibres and which can have properties at least as good as products made without a large proportion of secondary fibres.

An MMVF product according to one aspect of the invention comprises an air laid bonded web of a substantially uniform mixture of MMV fibres wherein at least 30% (by number) of the MMV fibres have a length of not more than 0.5mm and at least 5%, by number, have a length of above 0.5mm, and wherein substantially all the fibres are bonded into the airlaid web.

The product of the invention differs from conventional airlaid MMV products by having a greatly increased proportion of short (up to 0.5mm) fibres. This increased proportion of very short fibres is generally provided by incorporating very short secondary (recycled) MMV fibres into the web during its production.

The amount of short fibres below 0.5mm is at least 30%, usually at least 40% or 45%, by number and can be as much as 50, 60 or even 70% by number. The amount of fibres having a length of above 0.5mm is usually at least 10% and generally it is at least 15% or 20%. It can be as much as 25% or 30% but usually is not more than about 40 or 50% by number. These fibres of above 0.5mm often have a length of at least lmm. Usually they have a length of not more than 10 or 15mm.

It is frequently preferred to have a significant proportion, for instance at least 20 or 30%, of very short fibres, for instance below 0.3mm and often below 0.2mm, for instance down to 0.05mm.

Although it can be possible to introduce secondary fibres such that the overall fibre length distribution is a skewed log-normal substantially monomodal distribution (or such a distribution with a shoulder), the preferred products of the invention have an essentially bi-modal length distribution such that they can be seen to have a substantially log-normal or skewed log-normal mono-modal distribution of short fibres having a length not more than 0.5mm superimposed on a substantially log-normal or skewed log-normal distribution of longer primary fibres typical of the distribution obtained when making airlaid MMVF products by conventional methods involving the use of a rotating fiberising rotor. The products can be multi-modal, with more than one peak below 0.5mm.

In order to determine the proportion of fibres having any particular lengths or range of lengths, the product is distributed in liquid such as glycerin so as to separate the fibres into individual fibres. The fibres are observed by projection onto a projection screen using a chartometer, whereby it is possible to classify the fibres according to length. An area on the projection screen is selected containing at least 200 fibres and every fibre in this area is classified. The number of fibres in each classification is counted and the number in that classification is expressed as the percentage of the total number of fibres in the sample.

The distribution according to length is conveniently conducted by counting the number of fibres having lengths within preselected (and often increasing) bands. For instance the number may be counted having a length within the band 0.02mm or less, within the band above 0.02 up to 0.04mm, above 0.04mm up to 0.07mm, above 0.07mm up to 0.15mm, and so on with increasing band widths, up to the point where the number of fibres is insignificantly low, generally around 7 to 10mm for stone fibres or 10 to 15mm for glass fibres. The numbers of fibres at each length are plotted with the number on a linear scale on the vertical axis and the length on a logarithmic scale on the horizontal axis.

In a second aspect of the invention, the MMVF product has a fibre length distribution with a peak at above 0.5mm, and often above 0.8mm and usually at around 1 to 3mm, and at least one peak at a value below 0.5mm and often below around 0.2mm and with a trough in between the two peaks which usually represents a difference in lengths of at least 0.2mm and often at least 0.5mm. The (or each) peak at below 0.5mm often represents a fibre number which is at least 0.5 times, and often one or two times and preferably three to ten times, the number of fibres at the peak of around 1 to 3mm.

A simple test for determining whether or not the primary and secondary fibres are substantially all bonded into the air laid web is the test described by Thomas Schneider in Ann.Occup.Hyg. (Annals of Occupational Hygiene), Volume 37, No 6, 1993, page 633 for the determination of airborne fibre concentrations. When the result shows a value below 0.5 fibre per cm³, it is considered that the product is non-dusting and that the fibres are satisfactorily bonded into the product.

It is usually considered desirable to maximise the mean fibre length in MMVF products and it is surprising that in the invention good results are obtained by including a substantial amount of very short fibres.

In one important embodiment of the invention, at least 50%, by number, of the fibres shorter than 0.5mm have a length below 0.15mm and often below 0.1mm, for instance 30 to 70 µm. The density of the product may be in the range 50 to 300 kg/m³.

In this embodiment of the invention, the presence of the secondary fibres reduces the cost of the product (since they are essentially a waste material and the costs of disposal or remelting are avoided) but does not significantly detract from the tensile strength, insulation value and other properties of the product. Indeed, preferably these properties are maintained or increased compared to the corresponding product made solely from primary fibres to the same total fibre weight and density.

In another important embodiment of the invention, at least 50% of the fibres shorter than 0.5mm have a length in the range 0.1 to 0.4mm, usually 0.15 to 0.3 or 0.4mm. The use of these longer secondary fibres in the invention can result in improved strength compared to the corresponding product made in the absence of the fibres but with an equivalent weight of primary fibres. This improved strength is particularly significant with light weight products, for instance when the MMVF product is a bonded slab or other integral article having a density in the range 10 to 80 kg/m³, preferably about 25 to 40 kg/m³.

The secondary fibres are generally prepared for incorporation into the MMVF product by milling waste MMVF material. The milling can be by hammer milling or by rod milling. As a result of milling the waste material to the specified short length it is possible to introduce large amounts of the secondary fibres into the product without the presence in the product of bundles of entangled and unbonded secondary fibres, and yet the secondary fibres can still contribute beneficially to the properties of the product.

The waste MMVF material may be of a composition different from that of the primary fibres. However, preferably the waste MMVF material is of substantially the same composition as the primary fibres. Thus it can be waste material produced from earlier batches of the same product.

When the primary fibres are of the stone wool type it is preferred that the secondary fibres are also of the type having a stone wool composition. Similarly, if the primary fibres are of the glass wool type, it is preferred that the secondary fibres also have a glass wool composition.

The primary MMVF fibres may be made in conventional manner by melting a charge of appropriately chosen mineral material, applying the mineral melt to a rotating fiberising rotor and thereby throwing the melt from the periphery of the rotor as fibres and forming a substantially annular cloud of the fibres, carrying the fibres axially from the rotor towards a collector surface and collecting the fibres on the collector surface as a web. The web may be laminated upon itself to form a thicker batt. The web or batt can be compressed and heated to cure binder in it.

The rotor can be a spinning cup type of rotor as described in EP-A-530843 or a Downey type of rotor as described in US-A-2944284 and US-A-3343933. Preferably, however, the rotor is mounted about a substantially horizontal axis and has a solid periphery and is constructed to receive melt applied to the periphery and to throw mineral fibres off the periphery. Preferably the rotor is part of a cascade spinner containing 2, 3 or 4 such rotors, such as described in WO-A-92/06047.

The web of MMV fibres must be an air laid web as it is impracticable to wet lay it and then dry it. The density, even after compression, is usually above 20 or 30 kg/m³ but below 300 kg/m³ compared to above 350 kg/m³ for wet laid products. It is usually not possible to achieve the required substantially uniform mixture of short and long MMV fibres by attempting to impregnate the shorter, secondary, fibres into a pre-formed web of longer, primary, fibres since the web tends to act as a filter and to cause a very non-uniform distribution of the shorter fibres in the web. Preferably therefore the web is made by forming a mixture of the shorter and longer MMV fibres while entrained in air and the resultant mixture is then collected on a collector. These steps are used in the process of the invention, discussed below.

In order that the secondary fibres are bonded into the product of the invention it is generally necessary that the secondary fibres should be coated with bonding agent before they are combined into the MMVF product. It can be difficult to obtain adequate contact between the secondary fibres and the binder if the binder is merely sprayed into a cloud of the secondary fibres and primary fibres, as in most prior art processes. It is therefore desirable to apply the binder to the secondary fibres before they become intermingled with the primary fibres. Accordingly, the invention also provides methods of making the products of the invention, which comprises applying mineral melt to a rotating fiberising rotor and thereby throwing the melt from the rotor as primary fibres and forming a substantially annular cloud of the primary fibres, coating the secondary fibres with binder, mixing the coated secondary fibres into the cloud, and collecting the mixture of primary and secondary fibres on a collector surface as a web, which methods are defined in claims 12 and 13.

Any convenient way of ensuring adequate contact between the secondary fibres and the binder prior to the entry of the secondary fibres into the cloud can be used. In practice the most effective way is to form a slurry which comprises a substantially stable fluid dispersion of the secondary fibres in an aqueous binder and to spray this slurry into the substantially annular cloud.

In particular good contact can be obtained by ensuring that the secondary fibres are contacted with the primary fibres at the point where formation of the primary fibres is taking place.

The manufacture of the MMVF product using a slurry of the secondary fibres is preferably conducted by spraying the slurry into the product by the general technique described in International Application No. WO-A-97/20781. In particular, the apparatus that is used for this purpose is preferably apparatus as described in International Application No. WO-A-97/20779.

The slurry usually contains the secondary fibres in an amount of at least 10 % by weight of the slurry and usually at least 20 %. It can be as much as 60 % or even 75 % but is not usually more than about 40 % or 50 % by weight of the slurry. Penetration of the sprayed slurry into the cloud of primary fibres and the distribution of the secondary fibres in the final product tends to be improved with increase in the specific gravity of the slurry. Accordingly this is usually at least 1.1 and often at least 1.3 or 1.4. It is usually below 2, generally below 1.7.

In order to facilitate spraying, it is desirable that the slurry should be reasonably stable against settlement and therefore the slurry preferably includes a dispersion stabiliser that inhibits settling. The dispersion stabiliser may be any suitable viscosifier but preferably it is a colloidal material since the presence of colloidal material in the aqueous phase can both inhibit settlement of the secondary fibres and adjust the rheology of the slurry so as to facilitate spraying. Preferably the dispersion stabiliser is a clay and thus the slurry is preferably a slurry of the secondary fibres in an aqueous dispersion of clay particles, having typically a size of below 5 µm, often below 3 µm, e.g. 0.1 to 2 µm.

Suitable types of clay which can be used for this process include swelling clays (generally referred to as bentonite) and non-swelling clays such as kaolin.

The amount of clay or other colloidal material is typically in the range 0.5 to 10 % based on the weight of slurry, generally 1.5 to 5%.

Some of the clays can tend to have a binding effect within the MMVF product and the clay particles may serve not only as dispersion stabiliser but as part or all of the binder. Preferably, however, the aqueous phase also contains the solution of organic resin which will serve as the binder, for instance any of the conventional resin binders which are used for bonding MMVF products.

If desired fibres (generally at least 90% below 0.5mm) formed of organic material (paper, polymer, vegetable, etc.) may also be included in amounts usually below 50%, generally below 20% by weight of fibres in the web.

It is necessary that the apparatus used for supplying and spraying the slurry of secondary fibres should not clog, for instance due to the flocculation or fibre entanglement which is liable to occur in an aqueous fibre slurry if the fibre length is too long, having regard to the concentration in that slurry. Accordingly the relationship between the concentration of secondary fibres and the length of the secondary fibres should be such that the slurry remains flowable and does not undergo significant flocculation on standing. The precise relationship between concentration and fibre length will depend upon the particular fibres. In general, when the mean fibre length is below about 0.lmm the slurry can conveniently contain at least 30% by weight of these fibres without significant risk of flocculation, but if the mean length is about 0.1 to 0.2mm it may be desirable for the concentration of the slurry to be kept below 20 or 25% and if the length of the secondary fibres is above 0.2mm it may be desirable for the concentration to be kept below about 10 or 15%.

The MMVF product can be used as fire insulation and protection, thermal insulation, noise reduction and regulation, construction media, horticultural media or as a reinforcement of other products such as plastics and as a filler. The material may be in the form of a bonded batt (which may be flat or curved) or the material may be comminuted into granulate.

In the accompanying drawings:

Figure 1 shows a cross-section through a rotor which forms part of a spinner which can be used for applying slurried secondary fibres.

Figure 2 is a graph of a number and length based bi-modal distribution of a product of the invention.

Figure 3 shows a distribution curve for a conventional MMVF product.

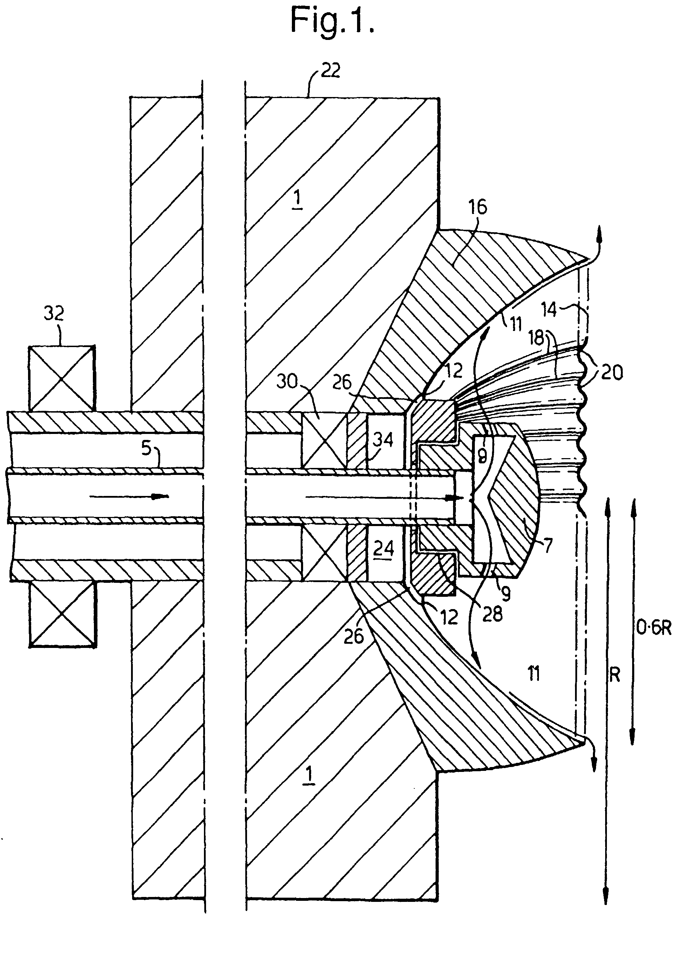

Figure 1 shows a solid rotor 1 of the type used in a cascade spinner mounted on a rotatable shaft 3. Fixed to the rotor is a fluid distribution means 16 having a distribution surface 11. The substantially frustoconical surface 11 is a concave surface containing a plurality of grooves 18, of which six are illustrated. The distribution surface has a short edge 12 and a long edge 14, the long edge 14 being forward of the short edge 12. The long edge 14 is at a radius 0.6 R, where R is the radius of the rotor. The rotor 1 is supported, on the rotating shaft 3, by roller bearings 32. A non-rotatable fluid flow duct 5 is supported on bearings 30, usually roller bearings, between the shaft 3 and the non-rotatable fluid flow duct 5. The non-rotatable fluid flow duct 5 leads into and is fixed to the fluid flow outlet 7, which is also non-rotatable. This has two (or more) radially extending discharge orifices. The radially extending discharge orifices may be inclined rearwardly at an angle of 10 to 45° so as to ensure that discharge liquid meets the distribution surface at the smallest possible radius.

In use a suspension of particulate solids (including secondary MMV fibres) in an aqueous phase is supplied (supply means not shown) to the fluid flow duct 5 which extends through the rotatable shaft 3 and into the fluid flow outlet 7. The fluid then passes through the orifices 9.

The partially atomised fluid passes across an air gap in the direction of the arrows and onto the distribution surface 11. The rapid spinning of the fluid distribution means 16 induces radial outward movement of the fluid, guided by the grooves 18, to the end points 20 of the grooves at the edge 14. From these end points the fluid is flung in atomised form from the distribution surface radially outwards and forward of the rotor.

If any suspension fails to travel radially outwards along the grooves 18, but tends to leak back into the apparatus, it passes along the inlet channel 28 into the rotating annular chamber 24. Rotation of the chamber induces the fluid to move to the outer wall of the chamber, from where it flows along outlet channel 26 onto the distribution surface at its short edge. Leakage into other regions of the apparatus is thus avoided.

Concurrently, melt is applied to the periphery 22 of the rotor 1 which is spinning rapidly and flinging the melt from the periphery as fibres. The fibres are blown forward by conventional air supply means (not shown) in an annular cloud. As the fibres are blown forward they are met by the atomised fluid from the fluid distribution means. The fluid and additives (secondary fibres and any other additives) it contains penetrate the annular cloud and coat the fibres.

The fibres are then collected as a web containing uniformly distributed additive on a collector in conventional manner. The web may be subjected to cross-lapping to form a batt, and the product may be compressed and heat cured in conventional manner.

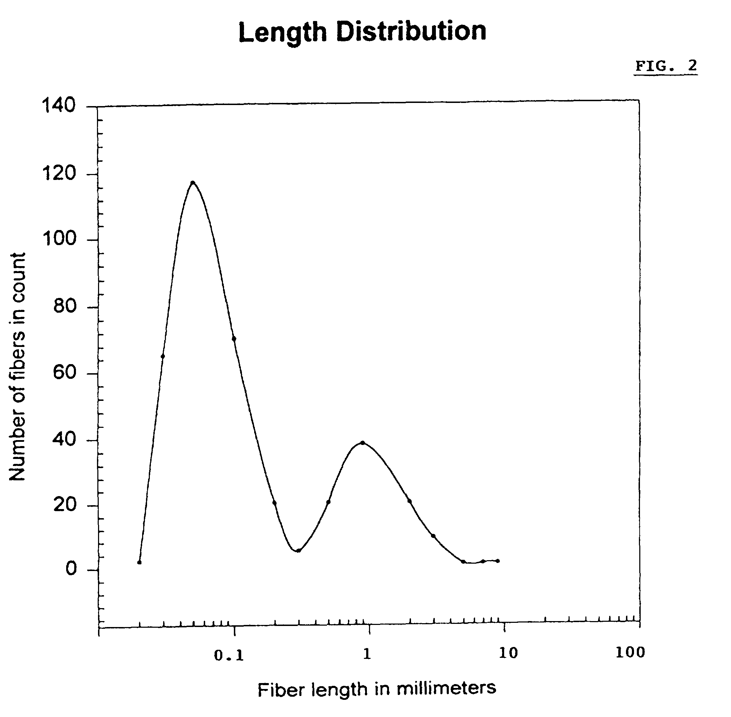

Figure 2 shows a distribution curve for a product according to the invention. The distribution is determined of a sample consisting of 369 fibres according to the method previously described. The ordinate shows the number of fibres in the different length intervals on a linear scale. The abscissa shows the length in millimeters on a logarithmic scale. As will be seen the distribution is a genuine bi-modal distribution.

The following are examples of the invention.

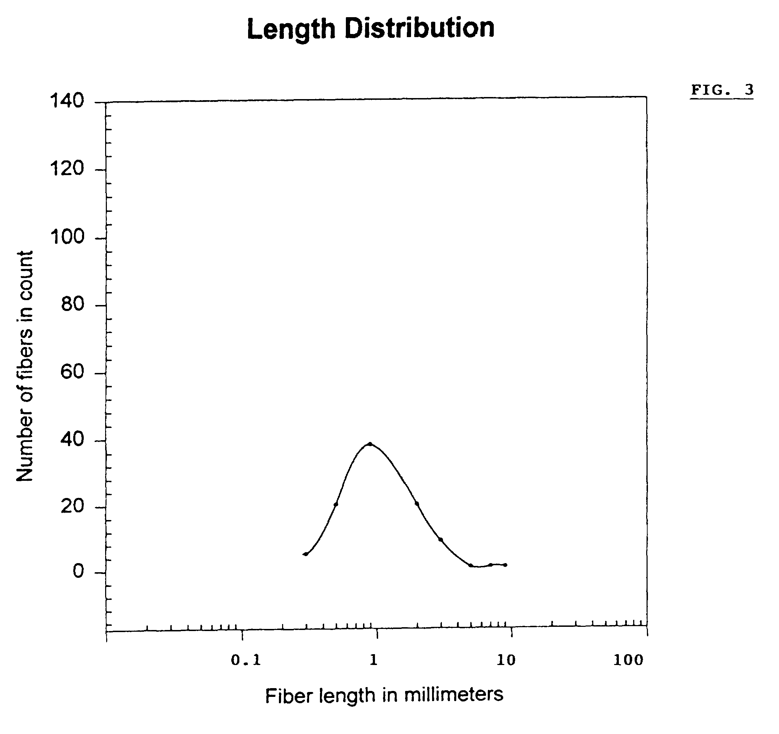

The length distribution of a typical product consisting solely of primary fibres is shown in Figure 3. The distribution is a log-normal distribution. A product with such a distribution is used as waste and is milled in a hammer mill or a rod mill to such a degree that the fibre lengths are diminished to 1/20 of the original lengths. A slurry is prepared consisting of by weight:
45% water,
5% clay,
1% binder,
49% milled waste fibres.

Fibres, clay and binder are dispersed in the water so as to form a stable dispersion. The slurry is injected through the spinning machine in such a way that 1 ton of secondary fibres per hour are injected into the annular cloud of primary fibres produced at a rate of 5 ton per hour. The substantially uniform mixture of primary and secondary fibres, clay and binder and additional binder sprayed directly on to the primary fibres is collected and cured. The resulting MMVF product has a length distribution as shown in Figure 2, where 81% by number of the fibres have a length of not more than 0.5mm and 19% by number have a length longer than 0.5mm.

When testing the final product for release of airborne or respirable fibres according to the previously mentioned method, airborne fibre concentrations below 0.5 fibre per cm³ are found, and the product may then be characterised as non-dusting.

## Claims

1. An MMVF product comprising an air laid bonded web of a substantially uniform mixture of MMV fibres wherein the fibres have a length distribution which has at least one peak below 0.5mm and a peak above 0.5mm and a trough in between the two peaks.

2. An MMVF product comprising an air laid bonded web of a substantially uniform mixture of MMV fibres wherein at least 30% by number of the MMV fibres have length not more than 0.5mm and at least 5% by number have a length of above 0.5mm and substantially all the fibres are bonded into the air laid web.

3. A product according to claim 2 in which at least 45% by number of the fibres have a length up to 0.5mm.

4. A product according to claim 2 or claim 3 in which at least 20% by number of the fibres have a length of 0.5 to 15mm.

5. A product according to any of claims 2 to 4 in which the fibres have a length distribution which has at least one peak below 0.5mm and a peak above 0.5mm.

6. A product according to claim 1 or claim 5 in which the peak at below 0.5mm represents a number of fibres which is at least 0.5 times the number at the peak above 0.5mm.

7. A product according to any preceding claim in which at least 30% by number of the fibres have a length of up to 0.2mm.

8. A product according to any preceding claim in which at least 50% of the fibres shorter than 0.5mm have a length of below 0.15mm and the density of the product is 50 to 300 kg/m³.

9. A product according to any of claims 1 to 7 in which at least 50% of the fibres shorter than 0.5mm have a length in the range 0.15 to 0.4mm and the product has a density in the range 10 to 80 kg/m^{3.}

10. A product according to any preceding claim containing clay substantially uniformly bonded into the product.

11. A product according to any preceding claim including organic binder uniformly distributed throughout the product.

12. A process of making a product according to claim 1 comprising forming primary MMV fibres by applying mineral melt to a rotating fiberising rotor (1) and thereby throwing the melt from the periphery (22) of the rotor as primary fibres, forming a substantially annular cloud of the primary fibres thrown from the periphery (22) of the rotor (1), providing milled secondary fibres, applying binder to the secondary fibres, mixing the secondary fibres to which binder has been applied into the cloud of primary fibres so as to form a substantially uniform blend of the primary fibres together with the milled secondary fibres while the primary and milled secondary fibres are entrained in air, wherein the blend of fibres has a length distribution which has at least one peak below 0.5 mm and a peak above 0.5 mm and a trough in between the two peaks, and collecting the mixture as an air-laid bonded web and curing the binder.

13. A process of making a product according to claim 2 comprising forming primary MMV fibres by applying mineral melt to a rotating fiberising rotor (1) and thereby throwing the melt from the periphery (22) of the rotor as primary fibres, forming a substantially annular cloud of the primary fibres thrown from the periphery (22) of the rotor (1), providing milled secondary fibres, applying binder to the secondary fibres, mixing the secondary fibres to which binder has been applied into the cloud of primary fibres so as to form a substantially uniform blend of the primary fibres together with the milled secondary fibres while the primary and milled secondary fibres are entrained in air, wherein in the blend of fibres at least 30% by number have length not more than 0.5 mm and at least 5% by number have length of above 0.5 mm, and collecting the mixture as an air-laid bonded web and curing the binder.

14. A process according to claim 12 or claim 13 in which the secondary fibres are coated with the binder by dispersing the secondary fibres as a slurry in aqueous binder and spraying the slurry into the annular cloud of primary fibres.

15. A process according to claim 14 in which the slurry contains clay.

## Patentansprüche

1. MMVF-Produkt, umfassend eine im Luftstrom aufgebrachte gebundene Bahn aus einer im wesentlichen einheitlichen Mischung von MMV-Fasern, worin die Fasern eine Längenverteilung aufweisen, die mindestens ein Maximum unter 0,5 mm und ein Maximum über 0,5 mm und eine Senke zwischen den beiden Maxima besitzt.

2. MMVF-Produkt, umfassend eine im Luftstrom aufgebrachte gebundene Bahn aus einer im wesentlichen einheitlichen Mischung von MMV-Fasern, worin mindestens 30% bezogen auf die Anzahl der Fasern eine Länge von nicht mehr als 0,5 mm aufweisen und mindestens 5% bezogen auf die Anzahl eine Länge von mehr als 0,5 mm aufweisen und im wesentlichen alle Fasern zu der im Luftstrom aufgebrachten Bahn gebunden werden.

3. Produkt nach Anspruch 2, worin mindestens 45% bezogen auf die Anzahl der Fasern eine Länge von bis zu 0,5 mm aufweisen.

4. Produkt nach Anspruch 2 oder Anspruch 3, worin mindestens 20% bezogen auf die Anzahl der Fasern eine Länge von 0,5 bis 15 mm aufweisen.

5. Produkt nach irgendeinem der Ansprüche 2 bis 4, worin die Fasern eine Längenverteilung aufweisen, die mindestens ein Maximum unter 0,5 mm und ein Maximum über 0,5 mm besitzt.

6. Produkt nach Anspruch 1 oder Anspruch 5, worin das Maximum bei unter 0,5 mm eine Anzahl von Fasern repräsentiert, die mindestens das 0,5-Fache der Anzahl bei dem Maximum über 0,5 mm beträgt.

7. Produkt nach irgendeinem vorhergehenden Anspruch, worin mindestens 30% bezogen auf die Anzahl der Fasern eine Länge von bis zu 0,2 mm aufweisen.

8. Produkt nach irgendeinem vorhergehenden Anspruch, worin mindestens 50% der Fasern, die kürzer als 0,5 mm sind, eine Länge von unter 0,15 mm aufweisen und die Dichte des Produkts 50 bis 300 kg/m³ beträgt.

9. Produkt nach irgendeinem der Ansprüche 1 bis 7, worin mindestens 50% der Fasern, die kürzer als 0,5 mm sind, eine Länge im Bereich von 0,15 bis 0,4 mm aufweisen und das Produkt eine Dichte im Bereich von 10 bis 80 kg/m³ aufweist.

10. Produkt nach irgendeinem vorhergehenden Anspruch, welches im wesentlichen gleichmäßig in das Produkt eingebundene Tonerde enthält.

11. Produkt nach irgendeinem vorhergehenden Anspruch, umfassend gleichmäßig in dem Produkt verteiltes organisches Bindemittel.

12. Verfahren zur Herstellung eines Produktes nach Anspruch 1, umfassend das Bilden primärer MMV-Fasern durch Aufbringen einer Mineralschmelze auf einen rotierenden Faserbildungsrotor (1) und dadurch Abschleudern der Schmelze vom Rand (22) des Rotors als Primärfasern, Bilden einer im wesentlichen ringförmigen Wolke aus den vom Rand (22) des Rotors (1) abgeschleuderten Primärfasern, Bereitstellen gemahlener Sekundärfasern, Aufbringen von Bindemittel auf die Sekundärfasern, Einmischen der Sekundärfasern, auf die Bindemittel aufgebracht wurde, in die Wolke aus Primärfasern, um eine im wesentlichen einheitliche Mischung der Primärfasern zusammen mit den gemahlenen Sekundärfasern bereitzustellen, während die Primär- und gemahlenen Sekundärfasern in Luft mitgeführt werden, worin die Mischung von Fasern eine Längenverteilung aufweist, die mindestens ein Maximum unter 0,5 mm und ein Maximum über 0,5 mm und eine Senke zwischen den beiden Maxima besitzt, und Sammeln der Mischung als eine im Luftstrom aufgebrachte gebundene Bahn und Härten des Bindemittels.

13. Verfahren zur Herstellung eines Produkts nach Anspruch 2, umfassend das Bilden von primären MMV-Fasern durch Aufbringen von einer Mineralschmelze auf einen rotierenden Faserbildungsrotor (1) und dadurch Abschleudern der Schmelze vom Rand (22) des Rotors als Primärfasern, Bilden einer im wesentlichen ringförmigen Wolke aus den vom Rand (22) des Rotors (1) abgeschleuderten Primärfasern, Bereitstellen gemahlener Sekundärfasern, Aufbringen von Bindemittel auf die Sekundärfasern, Einmischen der Sekundärfasern, auf die Bindemittel aufgebracht wurde, in die Wolke aus Primärfasern, um eine im wesentlichen einheitliche Mischung der Primärfasern zusammen mit den gemahlenen Sekundärfasern zu bilden, während die Primär- und gemahlenen Sekundärfasern in Luft mitgeführt werden, worin in der Mischung von Fasern mindestens 30% bezogen auf die Anzahl eine Länge von nicht mehr als 0,5 mm aufweisen und mindestens 5% bezogen auf die Anzahl eine Länge von mehr als 0,5 mm aufweisen, und Sammeln der Mischung als im Luftstrom aufgebrachte gebundene Bahn und Härten des Bindemittels.

14. Verfahren nach Anspruch 12 oder Anspruch 13, worin die Sekundärfasern durch Dispergieren der Sekundärfasern als Aufschlämmung in wässrigem Bindemittel und Einsprühen der Aufschlämmung in die ringförmige Wolke aus Primärfasern mit dem Bindemittel beschichtet werden.

15. Verfahren nach Anspruch 14, worin die Aufschlämmung Tonerde enthält.

## Revendications

1. Produit MMVF comprenant une nappe liée posée à l'air d'un mélange pratiquement uniforme de fibres MMV, dans lequel les fibres ont une distribution de longueur qui a au moins un maximum inférieur à 0,5 mm et un maximum supérieur à 0,5 mm et un creux entre les deux maxima.

2. Produit MMVF comprenant une nappe liée posée à l'air d'un mélange pratiquement uniforme de fibres MMV dans lequel 30 % au moins en nombre des fibres MMV ont une longueur qui ne dépasse pas 0,5 mm et 5 % en nombre au moins ont une longueur supérieure à 0,5 mm, et la totalité des fibres pratiquement sont liées dans la nappe posée à l'air.

3. Produit selon la revendication 2, dans lequel 45 % au moins en nombre des fibres ont une longueur inférieure ou égale à 0,5 mm.

4. Produit selon la revendication 2 ou 3, dans lequel 20 % au moins en nombre des fibres ont une longueur comprise entre 0,5 et 15 mm.

5. Produit selon l'une quelconque des revendications 2 à 4, dans lequel les fibres ont une distribution de longueur qui a au moins un maximum au-dessous de 0,5 mm et un maximum au-dessus de 0,5 mm.

6. Produit selon la revendication 1 ou 5, dans lequel le maximum inférieur à 0,5 mm représente un nombre de fibres au moins égal à 0,5 fois le nombre de fibres au maximum supérieur à 0,5 mm.

7. Produit selon l'une quelconque des revendications précédentes, dans lequel 30 % au moins en nombre des fibres ont une longueur inférieure ou égale à 0,2 mm.

8. Produit selon l'une quelconque des revendications précédentes, dans lequel 50 % au moins des fibres plus courtes que 0,5 mm ont une longueur inférieure à 0,15 mm, et la masse volumique du produit est comprise entre 50 et 300 kg/m³.

9. Produit selon l'une quelconque des revendications 1 à 7, dans lequel 50 % au moins des fibres plus courtes que 0,5 mm ont une longueur comprise entre 0,15 et 0,4 mm et le produit a une masse volumique comprise entre 10 et 80 kg/m³.

10. Produit selon l'une quelconque des revendications précédentes, contenant de l'argile liée de manière pratiquement uniforme dans le produit.

11. Produit selon l'une quelconque des revendications précédentes, comprenant un liant organique distribué uniformément dans tout le produit.

12. Procédé de fabrication d'un produit selon la revendication 1, comprenant la formation de fibres primaires MMV par application d'une matière minérale fondue à un rotor rotatif de fibrage (1), et par projection de cette manière de la matière fondue depuis la périphérie (22) du rotor sous forme de fibres primaires, par formation d'un nuage pratiquement annulaire des fibres primaires projetées par la périphérie (22) du rotor (1), par formation de fibres secondaires broyées, par application d'un liant aux fibres secondaires, par mélange des fibres secondaires auxquelles le liant a été appliqué dans le nuage des fibres primaires de manière qu'un mélange pratiquement uniforme des fibres primaires et des fibres secondaires broyées soit formé lorsque les fibres primaires et les fibres secondaires broyées sont entraînées dans l'air, le mélange de fibres ayant une distribution de longueur qui comporte au moins un maximum au-dessous de 0,5 mm et un maximum au-dessus de 0,5 mm et un minimum entre les deux maxima, et par collecte du mélange sous forme d'une nappe liée posée à l'air et par durcissement du liant.

13. Procédé de fabrication d'un produit selon la revendication 2, comprenant la formation de fibres primaires MMV par application d'une matière minérale fondue à un rotor rotatif de fibrage (1), et ainsi par projection de la matière fondue par la périphérie (22) du rotor sous forme de fibres primaires, par formation d'un nuage pratiquement annulaire des fibres primaires projetées depuis la périphérie (22) du rotor (1), par formation de fibres secondaires broyées, par application d'un liant aux fibres secondaires, par mélange des fibres secondaires auxquelles le liant a été appliqué dans le nuage des fibres primaires pour la formation d'un mélange pratiquement uniforme des fibres primaires avec les fibres secondaires broyées alors que les fibres primaires et les fibres secondaires broyées sont entraînées dans l'air, tel que, dans le mélange de fibres, 30 % au moins en nombre ont une longueur qui ne dépasse pas 0,5 mm et 5 % au moins en nombre ont une longueur supérieure à 0,5 mm, et par collecte du mélange sous forme d'une nappe liée et posée à l'air et par durcissement du liant.

14. Procédé selon la revendication 12 ou 13, dans lequel les fibres secondaires sont revêtues du liant par dispersion des fibres secondaires sous forme d'une suspension dans un liant aqueux, et par pulvérisation de la suspension dans le nuage annulaire de fibres primaires.

15. Procédé selon la revendication 14, dans lequel la suspension contient de l'argile.
